# EUROPEAN PATENT APPLICATION

(11) **EP 3 193 090 A1**
(43) Date of publication of application: **19.07.2017**
(21) Application number: 17020010.9
(22) Date of filing: 05.01.2017
(51) Int. Cl.: F24F 3/14, F24F 3/147, F25B 13/00, F24F 12/00, F24F 13/14, F24F 11/00, F24F 11/02

(54) **AIR RENEWING UNIT AND RELATIVE OPERATING PROCEDURE**

(30) Priority: 18.01.2016 IT UB20163734
(71) Applicant: Zoppellaro S.r.l., 35020 Codevigo (PD) (IT)
(72) Inventor: Zoppellaro, Giuseppe, 35020 Codevigo PD (IT); Zoppellaro, Francesco, 35020 Codevigo PD (IT)
(74) Representative: Baldissera, Marco Felice

(57) **Abstract**

The invention refers to an air renewing unit (10) for renewing the air of a usage environment (200) with air from an outer environment (300) comprising a transiting volume (11), at least one introducing section (12), a take-up section (13) for introducing a flow of take-up air (50) and a flow of replacing air (60), at least one feeding section (14) for feeding a flow of renewing air (70), at least one discharging section (15) for discharging a flow of exhausted air (80), connecting interfaces (17) inserted into said transiting volume (11), and at least one reversible thermo-hygrometric processing complex of an air-to-air heat pump type (16) partially inserted into said transiting volume (11). The peculiarity of the invention consists in the fact that said connecting interfaces (17) comprise a first and a second activable/deactivable barrier (18, 19) set up according to a crossed conformation and maneuverable according to a first/second working configuration depending on a direct/reverse operating mode of said reversible complex (16). The invention further refers to an operating procedure of said air renewing unit (10).

## Description

The object of the present invention is an air renewing unit, to be especially, but not exclusively employed for the air conditioning of public, commercial and industrial premises. Advantageously, the invention also refers to an operating procedure for the mentioned air apparatus.

In the sector of producing, installing, maintaining and utilizing air conditioning apparatus for the mentioned types of premises, the air renewing units of an "air-to-air heat pump" are highly appreciated. These are essentially performing the task of substituting a flow of take-up air, picked up from a usage environment, with a flow of renewing air, meaning a flow of replacing air originated from the outer environment and treated from a thermo-hygrometric viewpoint. A unit of this type comprises above all a transiting volume, then an introducing and a take-up section that connect the mentioned transiting volume to the mentioned usage and the outer volume, for the purpose of introducing said take-up air flow and a renewing air flow into the mentioned transiting volume. Said unit further comprises a feeding section that connects the mentioned transiting volume with the mentioned usage environment, for the purpose of feeding the mentioned flow of renewing air from the mentioned transiting volume to the mentioned usage environment. Moreover, said unit is provided with a discharging section that connects the mentioned transiting volume with the mentioned outer environment for the purpose of discharging a flow of exhausted air from the mentioned transiting volume to the mentioned outer environment. In addition, said unit is fitted with connecting interfaces inserted into the mentioned transiting volume, that serve the task of connecting the mentioned introducing section to the discharging section, and the mentioned take-up section with the feeding section. Finally, said unit comprises a reversible thermo-hygrometric processing complex based on an air-to-air heat pump type, which is at least partially inserted into the mentioned transiting volume for the purpose of processing, from a thermo-hygrometric viewpoint, the mentioned flows of take-up air and of renewing air, respectively, into the mentioned flows of exhausted and renewing air.

One of the technical problems encountered in this type of unit resides in the reversible thermo-hygrometric processing complex, where the heat exchanging unit operating as an evaporator is subject to a progressive deterioration of heat exchanging efficiency due to an accumulation of solid deposits i.e. ice on the heat exchanging surfaces. In accordance with the known state of the art, this problem is overcome by a periodical removal of such deposits. The relative operating procedure provides a temporary inversion of the operating cycle of the thermo-hygrometric processing complex. In this manner, the corresponding heat exchanging unit, which operates as an evaporator under normal operating conditions, functions as a condenser releasing thermal energy, which is in turn promoting a melting of the mentioned solid deposits. At the conclusion of this phase, the processing complex resumes its normal operation.

The main drawback encountered in the technical solution described above consists in an undesirable and substantial lowering of the temperature of the renewing air to be introduced into the usage environment, which turns particularly acute when the temperature of the outer environment is low. In fact and especially in the winter season, the thermo-hygrometric processing unit temporarily operating in an reverse mode produces and introduces into the usage environment a flow of renewing air at a temperature below that of the outer air, which affects the living conditions in the usage environment.

Another drawback attributable to the mentioned technical solution consists in a substantial reduction of efficiency of the air renewing unit during the phases of removing the solid deposits, namely the ice. It is in fact found that the thawing or de-icing process is a progressive process, because certain areas are de-iced sooner and others later. At an advanced stage of this process, some areas are engaged in melting the solid deposits, namely the ice, while other areas in the already de-iced heat exchanging unit are exchanging heat with the surrounding environment, thus in fact wasting precious thermal energy to the outer environment. This dispersion of heat toward the outer environment during the removal of the solids thus represents the origin of a part of the reduction of energy efficiency of the air renewing unit.

The aim of the present invention is to develop an air renewing unit and a relative operating procedure capable of promoting the removal of the mentioned solid deposits and of continuing the supply of renewing air, meaning of a suitably treated air to the usage environment.

Within the scope of the aim outlined above, an important task of the present invention is to develop an air renewing unit and a relative operating procedure capable of promoting the removal of the mentioned solid deposits and of continuing the emission of renewing air, i.e. suitably treated air toward the usage environment.

Again within the scope of the aim outlined above, an important task of the present invention is to develop an air renewing unit and a relative operating procedure capable of achieving a substantial energy and economic advantage.

Not the least task of the present invention is to develop a simplified and durable air renewing unit.

This task, as well as these and yet other purposes that will be more clearly appear in the following, are achieved by an air renewing unit and a relative operating procedure in agreement with the attached claims.

In accordance with first advantageous characteristics of the invention, the air renewing unit for renewing the air of a usage environment with air from the outer environment comprises, above all, a volume of transit, then a section of introducing and one of take-up, that connect the mentioned transiting volume to the mentioned usage volume and the outer volume, respectively, for the purpose of introducing a flow of take-up air picked-up from the usage environment and a flow of replacing air picked up from the mentioned outer environment, respectively, into the mentioned transiting volume. Moreover, said unit is fitted with connecting interfaces inserted into the mentioned transiting volume that perform the task of connecting the mentioned introducing section with the discharging section, and the mentioned take-up section with the feeding section. Finally, said unit comprises a reversible thermo-hygrometric processing unit of an air-to-air heat pump type, inserted in an at least partial manner into the mentioned transiting volume for the purpose of processing, from a thermo-hygrometric viewpoint, the mentioned take-up air and the replacing air, respectively, into the mentioned flows of exhausted and renewing air.

In particular, said air renewing unit offers the particular feature that the mentioned connecting interfaces comprise a first and a second activable/deactivable barrier arranged in a crossed conformation and maneuverable in accordance with: a first working configuration wherein said first and said second activable/deactivable barriers assume an activated and a deactivated mode, respectively, in correspondence with a direct operating mode of said reversible thermo-hygrometric processing complex of an air-to-air heat pump type; and a second working configuration wherein said first and said second activable/deactivable barriers assume a deactivated and an activated mode, respectively, in correspondence with a reverse operation of said reversible thermo-hygrometric processing complex of an air-to-air heat pump type.

In turn, the operating procedure for operating an air renewing unit as above comprises a continuing action of detecting solid deposits such as ice in said thermo-hygrometric processing complex of an air-to-air heat pump type and a commuting maneuver for commuting said reversible thermo-hygrometric processing complex of an air-to-air heat pump type between said direct/reverse operating modes in case of a positive result of said detecting action.

The peculiarity of said operating procedure consists in a reconfiguring maneuver to reconfigure said first and second activable/deactivable barriers between said first and second working configurations, simultaneously with said commuting maneuver.

This combination of peculiarities allows achieving the aim of the invention because, as will be appreciated further on, it is capable of promoting the removal of solid deposits, meaning ice, and of continuing the emission of said flow of suitably treated renewing air to the usage environment.

Moreover, this combination of peculiarities also allows achieving one of the scopes of the invention because, as will be appreciated in the following description, it is capable of substantially improving the overall performance of the unit and consequently its relative energy efficiency and economic profitability. During the defrosting or de-icing realized through the commuting and reconfiguring maneuvers, the iced thermal exchanging unit is in contact with the usage environment from the beginning, by immediately discharging its thermal energy to the same and thus totally avoiding any losses of energy toward the outer environment.

These and other advantageous aspects of the invention will be more clearly apparent in a description of the forms of embodiment of an air renewing unit and of its relative operating procedure according to the invention, as illustrated for indicative yet non-limiting purposes in the attached drawings, where:
- Figure 1 represents a simplified ground view of an air renewing unit according to the invention, in accordance with a first installing configuration suitable for heating a usage environment, and conforming to a first working mode;
- Figure 2 represents a simplified ground view of the air renewing unit of Fig. 1 in accordance with said first installing configuration and conforming to a second working mode;
- Figure 3 represents a simplified ground view of an air renewing unit according to the invention, in accordance with a second installing configuration suitable for refreshing a usage environment and according to a first working mode;
- Figure 4 represents a simplified ground view of the air renewing unit of Fig. 3 in accordance with said second installing configuration and according to a second working mode; and the numerical references are presented as follows:
   10 Air renewing unit
   11 Transiting volume
   12 Introducing section
   13 Take-up section
   14 Feeding section
   15 Discharging section
   16 Reversible thermo-hygrometric processing complex of an air-to-air heat pump type
   17 Connecting interfaces
   18, 19 First and second activable/deactivable barriers
   20 Delimiting enclosure
   21 Introducing device
   22 Feeding device
   23 Heat exchanging unit, discharging side
   24 Heat exchanging unit, take-up side
   25 Compression device
   26 Expansion device
   27 Four-way, two working position commuting valve
   28 Wing-type elements
   50 Take-up air flow
   60 Replacing air flow
   70 Renewing air flow
   80 Exhausted air flow
   200 Usage environment
   300 Outer environment

With reference to the mentioned figures, the air renewing unit 10 for renewing the air of a usage environment 200 with the air of an outer environment 300 comprises, above all, a transiting volume 11, an introducing section 12 and a take-up section 13 that connect the mentioned usage environment 200 and the mentioned outer environment 300. The task of these introducing sections 12 and take-up sections 13 is to introduce a flow of take-up air 50, picked up from said usage environment 200, and a flow of replacing air 60 picked up from the outer environment 300, respectively, into the transiting volume 11 mentioned above. Moreover, said air renewing unit 10 comprises a feeding section 14 that connects the mentioned transiting volume 11 and the mentioned usage environment 200. The task of said feeding section is to feed a flow of renewing air 70 from the mentioned transiting volume 11 to the usage environment 200. Moreover, said air renewing unit 10 is fitted with a discharging section 15 that connects the mentioned transiting volume 11 with the outer environment 300. The task of said discharging section consists in discharging a flow of exhausted air 80 from the mentioned transiting volume 11 into the mentioned outer environment 300.

Moreover, said air renewing unit 10 comprises connecting interfaces 17 inserted into the mentioned transiting volume 11 that connect the mentioned introducing section 12 that introduces the mentioned take-up air flow 50 with the mentioned discharging section 15 and the mentioned take-up section 13 that introduces said replacing air flow 60 with the mentioned feeding section 14. Finally, said air renewing unit 10 comprises a reversible thermo-hygrometric processing complex of an air-to-air heat pump type that is at least partially inserted into said transiting volume 11. The purpose of the latter is to process, from a thermo-hygrometric viewpoint, the mentioned take-up air flow 50 and replacing air flow 60, respectively, into said exhaust air flow 80 and renewing air flow 70.

In detail, the mentioned transiting volume 11 is constituted of a delimiting enclosure 20 that has a boxed shape and lateral walls communicating with the mentioned introducing section 12, take-up section 13, feeding section 14 and discharging section 15. Moreover, the mentioned introducing section 12, that introduces the mentioned take-up flow 50, is fitted with at least one introducing device 21 set up in correspondence with said introducing section 12, and the task of said introducing device 21 consists in transferring the mentioned take-up air flow 50 from the mentioned usage environment 200 to the mentioned transiting volume 11. The mentioned feeding section 14 is in turn fitted with a feeding device 22 set up in correspondence with said feeding section 14, and the task of said feeding device 22 consists in transferring the mentioned air renewing flow 70 from the mentioned transiting volume 11 to the inner environment 200. In turn, the mentioned reversible thermo-hygrometric processing complex of an air-to-air pump type 16 comprises above all a heat exchanging unit on the discharging 23 interposed between the mentioned introducing section 12 and the discharging section 15 and a heat exchanging unit on the take-up side 24 interposed between said take-up section 13 and said feeding section 14.

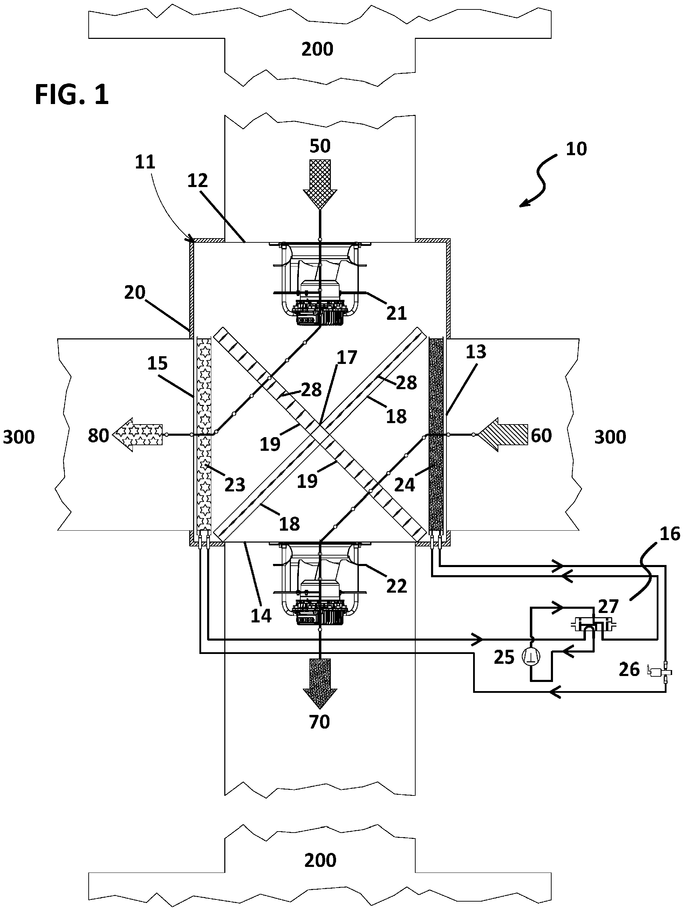

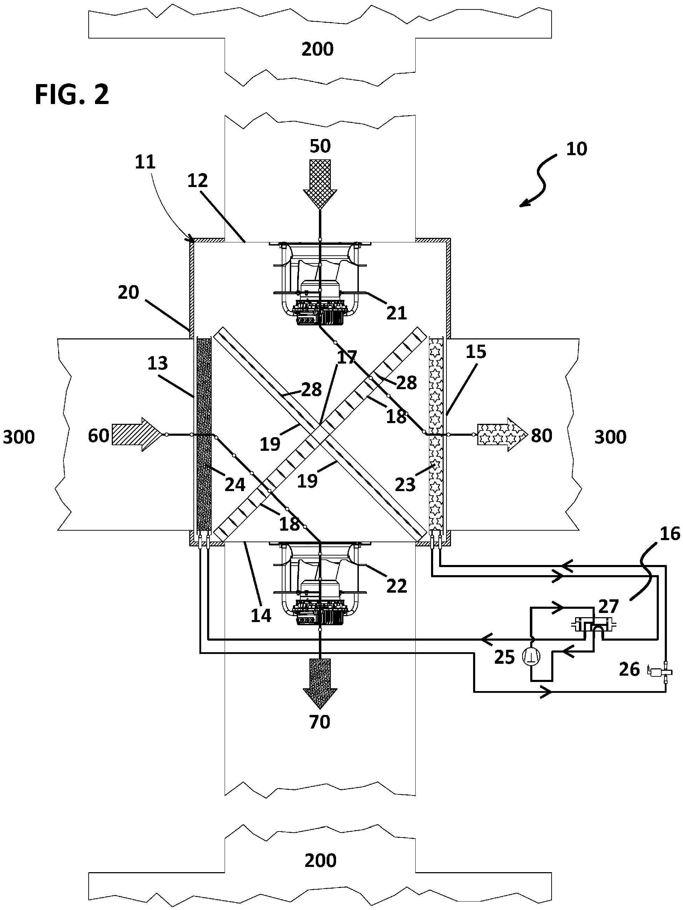

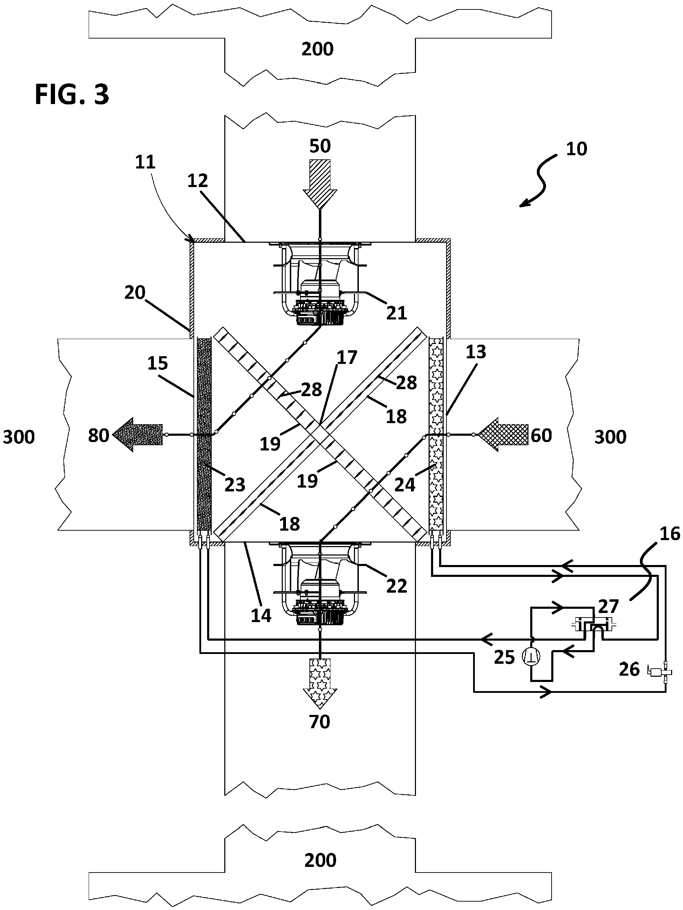

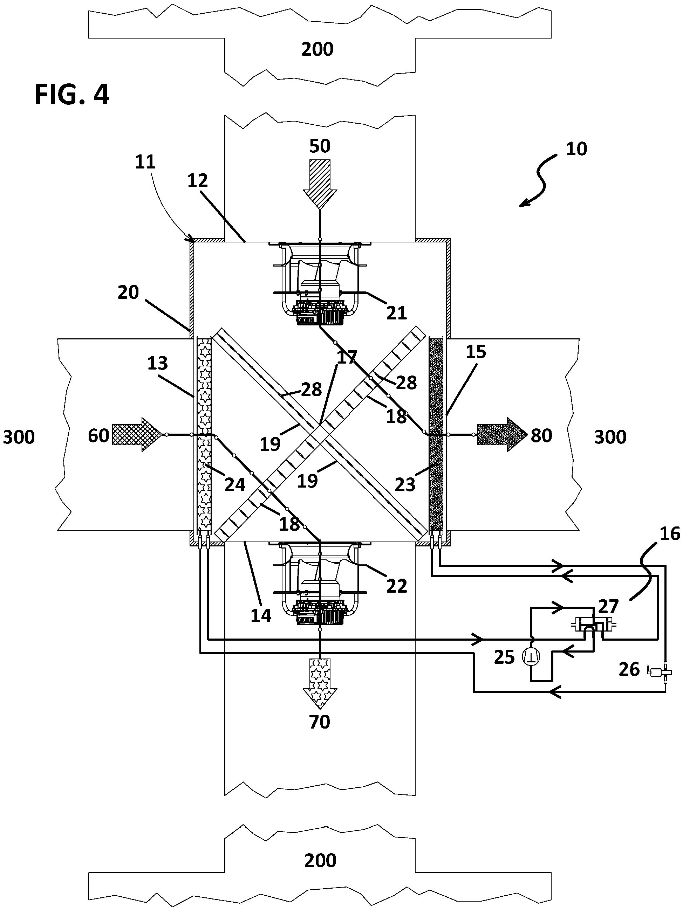

Said reversible complex 16 is further fitted with a compressing device 25 indirectly connected at the inlet and outlet of the first terminals of said heat exchanging units 23 and 24, an expansion device 26 connected at the inlet and outlet of the second terminals of said heat exchanging units 23 and 24, and a four-way and two working position commuting valve 27 interposed between said first terminals of said heat exchanging units 23, 24 and said compressing device 25. Finally, said reversible complex 16 comprises a working fluid that performs a thermodynamic cycle between said heat exchanging units 23 and 24, said compressing device 25 and said expanding device 26. The abovementioned connecting interfaces 17 are in turn constituted of a first and a second activable/deactivable barrier 18, 19 that are arranged in a crossed configuration and maneuverable as follows:
in accordance with a first working configuration, as illustrated in the figures 1 and 3, respectively, based on which said first and said second activable/deactivable barriers 18, 19 assume an activated and a deactivated mode, respectively, depending on the direct operating mode of the abovementioned reversible thermo-hygrometric processing complex of an air-to-air heat pump type 16; and
in accordance with a second working configuration, as illustrated in the figures 2 and 4, respectively, based on said first and said second activable/deactivable barriers 18, 19 assume a deactivated and an activated mode, respectively, depending on the reverse operating mode of the abovementioned complex 16.

In even greater detail, said first and said second activable/deactivable barriers 18, 19 are constituted of wing-type elements numbered 28. Said first and said second activable/deactivable barriers are further fitted with devices for maneuvering upon command (not shown), which are cinematically connected to the wing-type elements 28, so as to maneuver the latter upon command into an approached and a distanced configuration.

With reference now to the abovementioned exposition and all the mentioned figures, the operating procedure for operating said air renewing unit 10 provides above all for a continuing action of detecting solid deposits, namely ice, in said thermo-hygrometric processing complex of an air-to-air heat pump type 16. In a positive case, said procedure provides a commuting maneuver for maneuvering the direct/reverse operating modes of said reversible complex 16. Simultaneously with said commuting maneuver, said procedure provides a reconfiguring maneuver for reconfiguring said first/second working configuration of said first and second activable/deactivable barrier. In detail, said commuting maneuver comprises a switching action, for switching said commuting valve 27 between a first and a second working position. Said reconfiguring maneuver comprises in turn certain simultaneous modifying actions for modifying said first barrier 18 from an activated to a deactivated mode and said second barrier 19 from said deactivated to an activated mode, or simultaneous modifying actions for modifying said first barrier 18 from said deactivated to the activated mode, and said second barrier 19 from said activated to the deactivated mode.

With further reference to the mentioned exposition and the figures 1 and 2 in particular, a hint at the detailed operation of the air renewing unit 10 is given. Assume the unit for renewing air to be as shown in Figure 1. The continuing action of detecting solid deposits is at first exercised on the discharging side of the heat exchanging unit 23 operating as an evaporator and thus subject to a formation of solid deposits. At the moment that said detecting action yields a positive result, the unit proceeds to simultaneously affect the commuting and reconfiguring maneuvers indicated above. This commuting maneuver provides an exchanging intervention on the commuting valve 27. The effect of this intervention consists in reversing the direction of flow of the working fluid in the reversible complex 16. Consequently, the heat exchanging unit discharging side 23 acting as an evaporator now operates as a condenser, numbered 24 in Figure 2, to promote the melting of the solid deposits, while the heat exchanging unit take-up side 24 acting as a condenser now operates as an evaporator, numbered 23 in Figure 2. This reconfiguring maneuver results in turn in two simultaneous modifying interventions, based on which the first barrier 18 passes from the activated to the deactivated mode and the second barrier 19 passes from the deactivated to the activated mode. The routing of the air flows inside the transiting volume 11 is consequently modified as described in the following: the introducing section 12 that introduces said take-up air flow 50 is reconnected to a discharging section 15, as identified in the previous phase as take-up section 13, which discharges the flow of exhausted air 80; the feeding section 14, which feeds said renewing air flow 70, is reconnected to a take-up section 13, as identified in the previous phase as a discharging section, which introduces said exchanging air flow 60. The result of these commuting and reconfiguring maneuvers sets up the air renewing unit as shown in Figure 2. At this point, the continuing action of detecting solid deposits is exercised on the heat exchanging unit discharging side 23 operating as an evaporator and therefore subject to the formation of solid deposits. At the moment this detecting action provides a positive reply, the unit simultaneously proceeds to new commuting and reconfiguring maneuvers as outlined above. The result of these commuting and reconfiguring maneuvers returns the air renewing unit to the status shown in Figure 1. From here onward, the operating modes of the air renewing unit 10 alternate between the first and the second working modes of Figure 1 and 2 depending on the presence of solid deposits on the heat exchanging unit discharging side 23.

With further reference to the mentioned exposition and the Figure 3 and 4 in particular, a description of the detailed operation of the air renewing unit 10 is given. Assume the air renewing unit to be as shown in Figure 3. The continuing action of detecting solid deposits is at first exercised on the heat exchanging unit take-up side 24 that operates as an evaporator and is therefore subject to the formation of solid deposits. At the moment this detecting action provides a positive reply, the unit simultaneously proceeds to the commuting and reconfiguring maneuvers indicated above. In turn, said commuting maneuver provides an exchanging intervention on the commuting valve 27. The effect of this intervention consists in inverting the direction of flow of the working fluid that equips the reversible complex 16. Consequently, the heat exchanging unit take-up side 24 acting as an evaporator now operates as a condenser, numbered 23 in Figure 4, by promoting the melting of the solid deposits, while the heat exchanging unit discharging side 23 acting as a condenser now operates as an evaporator, numbered 24 in Figure 4. In turn, this reconfiguring maneuver results in two simultaneous modifying interventions based on which the first barrier 18 passes from the activated to the deactivated mode and the second barrier 19 passes from the deactivated to the activated mode.

The routing of the air flows inside the transiting volume 11 is consequently modified as described in the following: the introducing section 12 that introduces said take-up air 50 is reconnected to a discharging section 15 identified in the previous phase as take-up section 13, that discharges the flow of exhausted air 80, the feeding section 14 that feeds said flow of renewing air 70 is reconnected to a first take-up section 13 identified in the previous phase as discharging section 15 that introduces said flow of replacing air 60.

The result of the commuting and reconfiguring maneuvers sets up the air renewing unit as shown in Figure 4. At this point the continuing action of detecting solid deposits is exercised on the heat exchanging unit take-up side 24 that operates as an evaporator and is therefore subject to the formation of solid deposits. At the moment said detecting action provides a positive reply, the unit simultaneously proceeds to new commuting and reconfiguring maneuvers as outlined above. The reply of these commuting and reconfiguring maneuvers returns the air renewing unit to the status as shown in Figure 3. From here onward, the operating modes of the air renewing unit 10 alternate between the first and second working mode shown in Figure 3 and 4, depending on the presence of solid deposits on the heat exchanging unit take-up side 24.

In the light of the above description, it has in practice been verified that the air renewing unit and the relative operating procedure achieve the expected aim, tasks and objectives. In conclusion, the following additional advantageous aspects of the invention are highlighted in the fact that the unit can technically be realized by using standardized components in the air conditioning sector, with a resulting containment of the production and installation costs.

The air renewing unit and its relative operating procedure according to the invention are susceptible to numerous modifications and variants, all of which fall within the scope of the same inventive concept.

In a practical embodiment, the materials employed, the shapes, dimensions and executive details may differ from those indicated but are equivalent to them, without thereby abandoning the scope of the invention.

## Claims

1. Air renewal unit (10) for renewing the air in a usage environment (200) with air from an external environment (300), comprising a transiting volume (11),
at least one introduction section (12) and a take-up section (13) that connect said transiting volume (11) with said usage environment (300), respectively, to introduce a flow of take-up air (50) from said usage environment (200) and a flow of renewal air (60) from said external environment (300) into said transiting volume (11),
at least one feeding section (14) that connects said transiting volume (11) with said usage environment (200) to feed a flow of renewal air (70) from said transiting volume (11) to said usage environment (200),
at least one discharge section (15) that connects said transiting volume (11) with said external environment (300) to discharge a flow of exhausted air (80) from said transiting volume (11) to said external environment (300), connecting interfaces (17) inserted into said transiting volume (11) to connect said introduction section (12) with said discharge section (15) and said take-up section (13) with said feeding section (14),
at least one reversible thermo-hygrometric heat pump complex of air-to-air type (16) that is at least partially inserted into said transiting volume (11) to thermo-hygrometrically process said flows of take-up air (50) and renewal air (60), respectively, to said flows of exhausted air (80) and renewal air (70), respectively,
**characterized in that** said connecting interfaces (17) comprise a first and a second activating/deactivating barrier (18, 19), arranged in a crossed configuration and maneuverable in accordance with:
a first working configuration wherein said first and said second activating/deactivating barriers (18, 19) assume a deactivated and activated mode, respectively, corresponding to a direct operating mode of said reversible thermo-hygrometric heat pump processing complex of air-to-air type (16),
a second working configuration wherein said first and said second activating/deactivating barriers (18, 19) assume a deactivated and an activated mode, respectively, corresponding to an inverted operating mode of said reversible thermo-hydrometric heat pump complex of air-to-air type (16).

2. Air renewal unit (10) according to the former claim, **characterized in that** said transiting volume (11) comprises a delimiting enclosure (20) having a boxy shape and lateral walls communicating with said introduction (12), take-up (13), feeding (14) and discharge (15) sections.

3. Air renewal unit (10) according to claims 1 and 2, **characterized in that** said introduction section (12) that introduces said take-up flow (50) comprises at least one introduction device (21) arranged next to said introduction section (12) to transfer said a take-up air flow (50) from said usage environment (200) into said transiting volume (11).

4. Air renewal unit (10) according to claims 1 and 2, **characterized in that** said feeding section (14) comprises a feeding device (22) arranged next to said feeding section (14) to transfer said renewal air flow (70) from said transiting volume (11) to said external environment (300).

5. Air renewal unit (10) according to claim 1, **characterized in that** said reversible thermo-hygrometric heat pump processing complex of Air-to-air type (16) comprises at least one heat exchange unit on the discharge side (23) interposed between said introduction section (12) and said discharge section (15) and a heat exchange unit on the take-up side (24) interposed between said take-up side (13) and said feeding side (14), a compression device (25) indirectly connected at the inlet and outlet with the first terminals of said heat exchange units (23, 24), an expansion device (26) connected at the inlet and outlet to second terminals of said heat exchange units (23, 24) a four-way and two working position commuting valve (27) interposed between said first terminals of said heat exchange units (23, 24) and said compression device (25), and a working fluid that performs a thermodynamic cycle across said heat exchange units (23, 24), said compression device (25) and said expansion device (26).

6. Air renewal unit (10) according to claim 1, **characterized in that** said first and second activating/deactivating barriers (18, 19) comprise flap-type elements (28) and cinematically controlled maneuvering devices connected to flap-type elements (28) for maneuvering, upon command, said plurality of flap-type elements (28) into an attached and a detached configuration.

7. Operating procedure for operating an air renewal unit (10) according to claim 1 and the following claims, comprising a continuous action of detecting solid deposits such as ice in said thermo-hygrometric processing complex based on a heat pump of an air-to-air type (16), a commuting action for commuting said reversible thermo-hygrometric processing complex based on a heat pump of an air-to-air type between said direct/invert operating modes in case of a positive result of said detecting action, **characterized in that** it comprises a reconfiguring maneuver for reconfiguring said first and second activating/deactivating barriers (18, 19) between said first and second working configurations, simultaneously with said reconfiguring maneuver.

8. Operating procedure according to the former claim, **characterized in that** said reconfiguring maneuver comprises a switching action to switch said commuting valve (27) between a first and a second working position.

9. Operating procedure according to the former claims, **characterized in that** said reconfiguring maneuver comprises simultaneous modifying actions to modify said first barrier (18) from said activated to said deactivated mode and said second barrier (19) from said deactivated to said activated mode, or simultaneous modifying actions to modify said first barrier (18) from said deactivated mode to said activated mode and second barrier (19) from said activated to said deactivated mode.

10. Air renewal unit according to the previous claims, **characterized in that** it implements an operating procedure according to the previous claims.
